# EUROPEAN PATENT APPLICATION

(11) **EP 3 680 505 A1**
(43) Date of publication of application: **15.07.2020**
(21) Application number: 17924275.5
(22) Date of filing: 06.09.2017
(51) Int. Cl.: F16D 65/14

(54) **MECHANICAL MOTOR-DRIVEN FRICTION BRAKE DEVICE FOR RAIL VEHICLE**

(71) Applicant: Shanghai Liupei Mechanical and Electrical Technology Co., Ltd, Shanghai 200092 (CN)
(72) Inventor: WU, Mengling, Shanghai 200092 (CN); CHEN, Maolin, Shanghai 200092 (CN); TIAN, Chun, Shanghai 200092 (CN); PENG, Shun, Shanghai 200092 (CN); FENG, FuLei, Shanghai 200092 (CN); LEI, Chi, Shanghai 200092 (CN); MA, Tianhe, Shanghai 200092 (CN)
(74) Representative: Zaboliene, Reda
(86) International application number: PCT/CN2017/100629
(87) International publication number: WO 2019/047044

(57) **Abstract**

A mechanical motor-driven friction brake device for a rail vehicle consists of a torque motor, an electromagnetic brake (5), a screw nut transmission mechanism, and a brake friction pair (6), the torque motor and a screw (4) being coaxially mounted, the screw (4) being in non-self-locking threaded connection with a nut (3), and one end of the nut (3) being connected to the brake friction pair (6); the device drives, by means of the torque motor, the screw (4) to rotate so as to drive the nut (3) to perform linear motion and outputs a pressure or a pulling force to the brake friction pair (6), so as to brake or release the rail vehicle; in addition, this device can lock the screw by means of the electromagnetic brake (5), realizing the function of parking brake. The device is driven by a motor, is easy to control, and has a compact structure, facilitating the reduction of overall complexity of a brake system, and being light in weight.

## Description

### TECHNICAL FIELD

The present invention belongs to the technical field of braking systems for rail vehicle, and more particularly relates to a motor-driven friction braking device for a rail vehicle.

### BACKGROUND

For a long time, brake systems for rail vehicles have been air brakes. Compared with hydraulic transmission, the air brake has low pressure and poor force transmission efficiency and requires a larger brake cylinder and various valve bodies to meet the braking force requirements. Therefore, the air brake has relatively large volume and weight and a complicated structure, is difficult to control, and also takes up a lot of space, which is not conducive to the lightweight design of rail vehicles. So, a hydraulic braking system is gradually developed. Compared with the air brake system, the hydraulic brake system is reduced in both overall volume and weight, simpler in control and is thus suitable for urban rail transit vehicles with limited installation space. However, after all, the braking force is still transmitted by a medium, pipelines and valve bodies of the hydraulic braking system are still complicated, accompanied with a risk of oil leakage. Currently, the hydraulic braking system is only used for urban rail vehicles.

In this context, the present invention completely changes a power generation mode and a force transmission mode, and provides a device for generating a force through a motor and transmitting the force by a machine. Therefore, the braking system is more compact, smaller in volume, more convenient to control, lighter in mass, and more suitable for rail vehicles with small bottom space.

### SUMMARY

The object of the present invention is to provide a motor-driven friction braking device for a rail vehicle, which can implement an electrically-driven braking system for a rail vehicle.

To fulfill said object, a mechanical motor-driven friction braking device for a rail vehicle is designed, which consists of a torque motor, an electromagnetic brake, a nut, a screw and a brake friction pair, the torque motor comprising a torque motor rotor and a torque motor body, and is characterized in that the torque motor is of a hollow structure; a hollow part of the screw, which is inserted into the torque motor, is coaxially fixedly connected to the motor; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the screw and the nut in sequence to achieve braking.

In a preferred embodiment, the torque motor is a hollow torque motor; the torque motor is coaxially connected and fixed to the screw; when the torque motor rotor rotates forward, an adjustable torque is output to the screw to implement braking; when the torque motor rotor rotates reversely, releasing is implemented.

In a preferred embodiment, the screw is in non-self-locking threaded connection with the nut; and the nut converts a rotational motion of the screw into an axial motion and outputs an axial thrust.

In a preferred embodiment, when the electromagnetic brake is de-energized, the electromagnetic brake is actuated and cannot rotate freely; when the electromagnetic brake is energized, the screw is disengaged from the electromagnetic brake and can rotate freely.

In a preferred embodiment, after the braking force is applied, the electromagnetic brake is powered off to lock the screw, and then the torque motor is stopped to maintain the thrust of the nut.

A braking method for a mechanical motor-driven friction braking device for a rail vehicle is as follows: when the torque motor rotor rotates forward, a desired braking torque is generated, and the electromagnetic brake and the screw are electrically separated; the torque motor rotor drives the screw to rotate, and the nut makes a translational motion by means of the rotation of the screw, resulting in axial motion; a brake friction pair installed on one end of the nut generates a brake clamping force; at this time, if the electromagnetic brake is powered off, the electromagnetic brake will lock the screw and the braking force will be maintained; when the torque motor rotor rotates reversely, the corresponding nut makes a translational motion reversely, and the brake friction pair is released.

### Beneficial Effects of the Invention

The advantages of an electric toothbrush having a compact structure provided by the present invention include, but are limited to the followings: the device changes a power generation mode and a force transmission mode, and provides a device for generating a force by a motor and transmitting the force by a machine, such that the brake system is compact, small in size, convenient to control, and light in weight, and thus suitable for rail vehicles with a small bottom space.

### BRIEF DESCRIPTION OF THE DRAWINGS

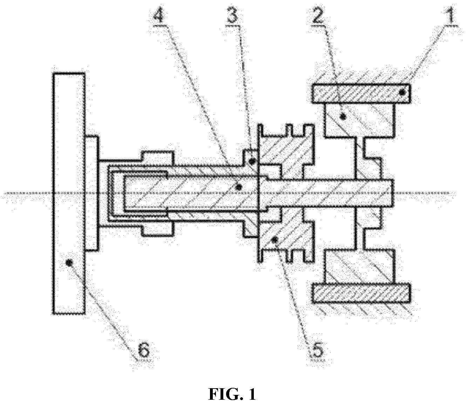

FIG. 1 illustrates a schematic diagram of a motor-driven friction braking device for a rail vehicle of the present invention according to an embodiment of the present invention.

In drawings, reference symbols represent the following components: 1-torque motor body, 2-torque motor rotor, 3-nut, 4-screw, 5-electromagnetic brake, and 6-brake friction pair.

### DETAILED DESCRIPTION

The present invention will be further described below with reference to the accompanying drawings. The structure and principle of this device are very clear to those skilled in the art. It should be understood that the specific embodiments described herein are only used to explain the present invention and are not intended to limit the present invention.

The following detailed description refers to the accompanying drawings, which form a part of the detailed description. In the drawings, similar symbols typically identify similar components, unless context dictates otherwise. The illustrative embodiments described in the detailed description, drawings and claims are not intended to be limitative. Other embodiments may be used, and other changes may be made, without departing from the spirit or scope of the subject matter provided by the present invention.

As shown in FIG. 1, a motor-driven friction braking device for a rail vehicle consists of a torque motor, an electromagnetic brake (5), a nut (3), a screw (4) and a brake friction pair (6), wherein the torque motor comprises a torque motor rotor (2) and a torque motor body (1); the torque motor is of a hollow structure; the screw (4) is inserted into the hollow part of the torque motor and is coaxially and fixedly connected to the motor; the screw (4) is sleeved with the nut (3) and is in non-self-locking threaded connection with the nut (3); one end of the nut (3) is connected to the brake friction pair (6); the electromagnetic brake (5) sleeves the screw (4) and is configured to control a locked state and a freely rotating state of the screw (4); the torque motor rotor (2) generates a braking torque which is transmitted to the braking friction pair (6) through the screw (4) and the nut (3) in sequence to achieve braking.

The torque motor is a hollow torque motor. The torque motor rotor (4) is coaxially and fixedly connected to the screw (4); when the torque motor rotor (2) rotates forward, an adjustable torque is output to the screw (4) to implement braking; when the torque motor rotor (2) rotates reversely, releasing is implemented.

The screw (4) is in non-self-locking threaded connection with the nut (3); and the nut (3) converts a rotational motion of the screw (4) into an axial motion and outputs an axial thrust, thereby achieving braking and releasing.

When the electromagnetic brake (5) is de-energized, the electromagnetic brake (5) is actuated and cannot rotate freely; when the electromagnetic brake (5) is energized, the screw (4) is disengaged from the electromagnetic brake (1) and can rotate freely.

After the braking force is applied, the electromagnetic brake (5) is powered off to lock the screw (4), and then the torque motor is stopped to maintain the thrust of the nut (3), thereby implementing parking and braking.

As shown in FIG. 1, a braking method for the motor-driven friction braking device for the rail vehicle is as follows: when the torque motor rotor (2) rotates forward, a desired braking torque is generated, and the electromagnetic brake (5) and the screw (4) are electrically separated; the torque motor rotor (2) drives the screw (4) to rotate, and the screw (4) rotates to drive the nut (3) to make a translational motion, resulting in an axial motion; a brake friction pair (6) installed on one end of the nut (3) generates a brake clamping force; if the electromagnetic brake (5) is powered off, the electromagnetic brake (5) will lock the screw (4) and the braking force will be maintained; when the torque motor rotor (2) rotates reversely, the corresponding nut (3) makes a translational motion reversely, and the brake friction pair is released.

Although some solutions and embodiments have been disclosed herein, other solutions and embodiments will be apparent to those skilled in the art. The various solutions and embodiments disclosed herein are exemplary and are not intended to be limitative, the true scope and spirit being indicated by the appended claims.

## Claims

1. A motor-driven friction braking device for a rail vehicle, consisting of a torque motor, an electromagnetic brake (5), a nut (3), a screw (4) and a brake friction pair (6), wherein the torque motor comprises a torque motor rotor (2) and a torque motor body (1); the torque motor is of a hollow structure; the screw (4) is inserted into the hollow part of the torque motor and is coaxially and fixedly connected to the motor; the screw (4) is sleeved with the nut (3) and is in non-self-locking threaded connection with the nut (3); one end of the nut (3) is connected to the brake friction pair (6); the electromagnetic brake (1) sleeves the screw (4); the torque motor rotor (2) generates a braking torque which is transmitted to the braking friction pair (6) through the screw (4) and the nut (3) in sequence to achieve braking.

2. The motor-driven friction braking device for the rail vehicle according to claim 1, wherein the torque motor is a hollow torque motor; the torque motor rotor is coaxially and fixedly connected to the screw (4); when the torque motor rotor (2) rotates forward, an adjustable torque is output to the screw (4) to implement braking; when the torque motor rotor (2) rotates reversely, releasing is implemented.

3. The motor-driven friction braking device for the rail vehicle according to claim 1, wherein the screw (4) is in non-self-locking threaded connection with the nut (3); and the nut (3) converts a rotational motion of the screw (4) into an axial motion and outputs an axial thrust.

4. The motor-driven friction braking device for the rail vehicle according to claim 1, wherein when the electromagnetic brake (5) is de-energized, the electromagnetic brake (5) is actuated and cannot rotate freely; when the electromagnetic brake (5) is energized, the screw (4) is disengaged from the electromagnetic brake (5) and can rotate freely.

5. The motor-driven friction braking device for the rail vehicle according to claim 1, wherein after the braking force is applied, the electromagnetic brake (5) is powered off to lock the screw (4), and then the torque motor is stopped to maintain the thrust of the nut (3).

6. A braking method for the motor-driven friction braking device for the rail vehicle according to claim 1, wherein when the torque motor rotor (2) rotates forward, a desired braking torque is generated, and the electromagnetic brake (5) and the screw (4) are electrically separated; the torque motor rotor (2) drives the screw (4) to rotate, and the screw (4) rotates to drive the nut (3) to make a translational motion, resulting in an axial motion; a brake friction pair (6) installed on one end of the nut (3) generates a brake clamping force; if the electromagnetic brake (5) is powered off, the electromagnetic brake (5) will lock the screw (4) and the braking force will be maintained; when the torque motor rotor (2) rotates reversely, the nut (3) makes a translational motion reversely, and the brake friction pair is released.
